# EUROPÄISCHE PATENTSCHRIFT

(11) **EP 2 150 711 B1**
(45) Veröffentlichungstag und Bekanntmachung des Hinweises auf die Patenterteilung: **17.07.2013**
(21) Anmeldenummer: 08759529.4
(22) Anmeldetag: 13.05.2008
(51) Int. Cl.: F16C 19/38, F16C 19/54, F16C 27/04, F16F 15/023

(54) **RUNDTISCHLAGER**
ROUND TABLE BEARING
PALIER POUR PLATEAU CIRCULAIRE

(30) Priorität: 18.05.2007 DE 102007023242
(43) Veröffentlichungstag der Anmeldung: 10.02.2010
(73) Patentinhaber: Schaeffler Technologies AG & Co. KG, 91074 Herzogenaurach (DE)
(72) Erfinder: GRUNAU, Arbogast, 91085 Weisendorf (DE); HILBINGER, Jürgen, 91413 Neustadt/A. (DE); SCHWINGHAMMER, Reinhard, 90587 Tuchenbach (DE)
(86) Internationale Anmeldenummer: PCT/EP2008/055816
(87) Internationale Veröffentlichungsnummer: WO 2008/141969

(56) Entgegenhaltungen:
- EP-A- 0 673 709
- DE-A1- 4 223 256
- DE-A1- 4 227 366
- DE-A1- 10 151 263

## Beschreibung

### Gebiet der Erfindung

Die Erfindung betrifft ein Rundtischlager, welches ein Radial-Axial-Wälzlager sowie einen Squeeze-Film-Dämpfer aufweist.

### Hintergrund der Erfindung

Ein gattungsgemäβes Rundtischlager der eingangs genannten Art ist beispielsweise aus der DE 101 51 263 A1 bekannt. Dieses Rundtischlager weist zwischen einander zugewandten Stirnseiten von Wälzkörperkäfigen und Gegenlaufringteilen jeweils einen Spalt auf, der mit Dämpfungsflüssigkeit gefüllt ist. Damit sind die Wälzkörperkäfige zugleich Teile der den Squeeze-Effekt nutzenden Dämpfungseinrichtung. Die Käfigstärke entspricht hierbei annähernd dem Durchmesser der als Wälzkörper verwendeten Rollen.

### Aufgabe der Erfindung

Der Erfindung liegt die Aufgabe zugrunde, ein für eine Werkzeugmaschine geeignetes Rundtischlager anzugeben, welches sich sowohl durch eine hohe Steifigkeit als auch durch einen kompakten, montagefreundlichen Aufbau auszeichnet.

### Zusammenfassung der Erfindung

Diese Aufgabe wird erfindungsgemäß gelöst durch ein Rundtischlager mit den Merkmalen des Anspruchs 1. Dieses Rundtischlager weist hinsichtlich der Wirkung parallel geschaltete Lager- und Dämpfungsvorrichtungen auf, nämlich ein zwei relativ zueinander rotierbare Laufringteile umfassendes Radial-Axial-Wälzlager und einen Squeeze-Film-Dämpfer. Ein zu den Laufringteilen konzentrisches, ringförmiges oder ringsegmentförmiges Dämpfergrundbauteil des Squeeze-Film-Dämpfers ist an einem nicht rotierbaren Rundtischbasisteil befestig bar, wobei ein und dieselbe Befestigungsvorrichtung sowohl der Befestigung des Dämpfergrundbauteils als auch der Befestigung eines der Laufringteile am Rundtischbasisteil dient. Die Befestigungsvorrichtung kann stoff-, form- oder kraftschlüssige Verbindungen umfassen.

Vorzugsweise sind mehrere Befestigungsschrauben jeweils durch das Dämpfergrundbauteil und das Laufringteil, auf welchem die Wälzkörper des Radial-Axial-Wälzlagers abrollen, gesteckt und am Rundtischbasisteil festgeschraub bar. Jede dieser Befestigungsschrauben erstreckt sich bevorzugt in Axialrichtung des Rundtischlagers und ist radial zwischen den Wälzkörpern des Radial-Axial-Wälzlagers und dem Dämpfungsspalt des Squeeze-Film-Dämpfers angeordnet. Das erste, gestellfeste Laufringteil und das Dämpfergrundbauteil können in einer insbesondere hinsichtlich der Montagefreundlichkeit sowie der erreichbaren Präzision besonders vorteilhaften Ausgestaltung auf einer einzigen, planen Oberfläche des Rundtischbasisteils auf liegen. In Platz sparender Anordnung nehmen der Squeeze-Film-Dämpfer und das Radial-Axial-Wälzlager dabei denselben axialen Bauraum ein, wobei der Squeeze-Film-Dämpfer bevorzugt radial außerhalb des Radial-Axial-Wälzlagers angeordnet ist.

Der Dämpfungsspalt erstreckt sich vorzugsweise im Wesentlichen in radialer Richtung und weist im einfachsten Fall einen rechteckigen Querschnitt auf. Abweichend hiervon kommt auch eine V-Form, U-Form oder sonstige gekrümmte Form des Dämpfungsspalts in Betracht. Mit Hilfe der genannten nicht linearen Formen des Dämpfungsspalts ist auf einfache Weise eine Dämpfungswirkung sowohl in axialer als auch in radialer Richtung erzielbar. In jedem Fall dämpft der Squeeze-Film-Dämpfer besonders wirksam Axial- sowie Kippschwingungen des Rundtisches.

Unabhängig von der genauen Form des insgesamt ringförmig um die Rotationsachse des Rundtischlagers angeordneten Dämpfungsspaltes sind dessen Ränder bevorzugt mittels umlaufender Dichtungen abgedichtet. Zusätzlich oder alternativ zu Dichtringen können durch Auswahl geeigneter Dämpfungsfluide, insbesondere Öle, und/oder durch Oberflächenbehandlung, insbesondere Beschichtungen, der den Dämpfungsspalt begrenzenden Bauteile Verluste des Dämpfungsfluids minimiert werden. Bereits die Querschnittsform des Dämpfungsspalts beeinflusst signifikant die beim Betrieb des Squeeze-Film-Dämpfers auftretende Leckrate. So können beispielsweise Rillen in den an den Dämpfungsspalt grenzenden Oberflächen zur Zurückhaltung des zur Schwingungsdämpfung verwendeten Fluids im Dämpfungsspalt beitragen. Gleichzeitig vergrößern solche Rillen die vom Dämpfungsfluid benetzten Oberflächen und verbessern damit besonders bei geringen Spaltbreiten die Dämpfungswirkung.

Die nicht notwendigerweise einheitliche Breite des Dämpfungsspalts beträgt vorzugsweise mindestens 20 µm und höchstens 500 µm. Nach einer vorteilhaften Weiterbildung ist die Spaltbreite des Squeeze-Film-Dämpfers variabel. In diesem Fall können maximale Spaltbreiten bis 10 mm vorgesehen sein, was nahezu einer Deaktivierung des Squeeze-Film-Dämpfers, beispielsweise für den Betrieb des Rundtisches bei hohen Drehzahlen und/oder geringer mechanischer Belastung, gleichkommt.

Unabhängig davon, ob die Spaltbreite des Squeeze-Film-Dämpfers konstant oder variabel ist, kann dieser mit einer elektro- oder magnetoreologischen Flüssigkeit als Dämpfungsfluid gefüllt sein. Eine solche Flüssigkeit ermöglicht auf einfache Weise eine bei Bedarf sehr schnelle Variation der Dämpfungseigenschaften in einem sehr weiten Rahmen. Das Dämpfungsfluid kann dem Dämpfungsspalt beispielsweise durch eine interne, in das Rundtischlager integrierte Pumpe, durch eine externe Pumpe oder durch Schwerkraft zugeführt werden. Um unterschiedliche, beispielsweise von thermisch bedingten Abmessungsänderungen oder von gezielt variablen Einstellungen der Dämpfungsspaltbreite abhängige Füllmengen des Squeeze-Film-Dämpfers auszugleichen, kann ein interner Ausgleichsbehälter für das Dämpfungsfluid vorgesehen sein. Der Austausch der Befüllung des Dämpfungsspaltes mit Dämpfungsfluid kann beispielsweise in Abhängigkeit von automatisch gemessenen Eigenschaften des Dämpfungsfluids oder zeitgetaktet erfolgen. Um Überlastungen des Squeeze-Film-Dämpfers einschließlich der Fluidversorgung zuverlässig zu vermeiden, kann mindestens ein Überdruck-Rückschlagventil in die Dämpfungsvorrichtung, beispielsweise in eine Leitung zwischen dem Dämpfungsspalt und einem Ausgleichsbehälter, integriert sein.

In bevorzugter Ausgestaltung existiert sowohl in axialer Richtung als auch in radialer Richtung ein Überlappungsbereich zwischen dem ersten, am Rundtischbasisteil befestigbaren Laufringteil und dem Dämpfergrundbauteil. In beiden Richtungen ist ein Anschlag des ersten Laufringteils am Dämpfergrundbauteil gegeben, so dass das erste Laufringteil relativ zum Dämpfergrundbauteil in radialer Richtung sowie zumindest in einer axialen Richtung festgelegt ist. Der Überlappungsbereich zwischen dem ersten Laufringteil und dem Dämpfergrundbauteil ist in Radialrichtung des Radial-Axial-Wälzlagers vorzugsweise schmaler als eine durch das erste Laufringteil gebildete Laufbahn, auf welcher die der Radiallagerung dienenden Wälzkörper abrollen. Die in Axialrichtung gemessene Höhe des Überlappungbereichs entspricht in bevorzugter Ausgestaltung der in derselben Richtung gemessenen Stärke des ersten Laufringteils. Das erste Laufringteil ist somit im Überlappungsbereich weder verstärkt noch verjüngt. Vorzugsweise beträgt die mit der Stärke des ersten, am Rundtischbasisteil befestigtbaren Laufringteils übereinstimmende, in Axialrichtung des Radikal-Axial-Wälzlagers gemessene Höhe des Überlappungsbereichs mindestens die Hälfte der ebenfalls in Axialrichtung des Rundtischlagers gemessenen Höhe des Dämpfergrundbauteils.

Der im Wesentlichen rechteckige Querschnitt des ersten, gestellfesten Laufringteils weist auch in radialer Richtung eine maximale Abmessung auf, die vorzugsweise geringer als die in derselben Richtung gemessene maximale Abmessung des Querschnitts des Dämpfergrundbauteils ist. Vorzugsweise beträgt die radiale Erstreckung des Querschnitts des ersten Laufringteils mindestens 30 % und höchstens 70 % der entsprechenden Abmessung des Querschnitts des Dämpfergrundbauteils. Die in Radialrichtung des Wälzlagers gemessene Erstreckung des Dämpfungsspalts ist vorzugsweise größer als die Länge der als Rollen ausgebildeten, der Axiallagerung dienenden Wälzkörper des Radial-Axial-Wälzlagers. Der Dämpfungsspalt des Squeeze-Film-Dämpfers ist einerseits durch das Dämpfergrundbauteil oder ein mit diesem verbundenes Teil und andererseits durch das zweite Laufringteil oder ein mit diesem verbundenes Bauteil begrenzt.

Der Vorteil der Erfindung liegt insbesondere darin, dass durch eine definierte Anlage des gestellfesten Laufringteils am Dämpfergrundbauteil und eine Befestigung dieser Teile am Rundtischgestell mit gemeinsamen Befestigungselementen eine hohe mechanische Präzision bei einfacher Montage erreichbar ist.

Nachfolgend werden mehrere Ausführungsbeispiele der Erfindung anhand einer Zeichnung näher erläutert. Hierin zeigen:

### Kurze Beschreibung der Zeichnung

- Figur 1: in einer Schnittdarstellung ein Rundtischlager mit Wälzlagerung und Squeeze-Film-Dämpfung, und
- Figur 2 - 6: in vergrößerten Schnittdarstellungen jeweils eine für das Rundtischlager nach Figur 1 geeignete Lager- und Dämpfungsvorrichtung.

Einander entsprechende oder gleich wirkende Teile sind in allen Figuren mit den gleichen Bezugszeichen gekennzeichnet.

### Ausführliche Beschreibung der Zeichnung

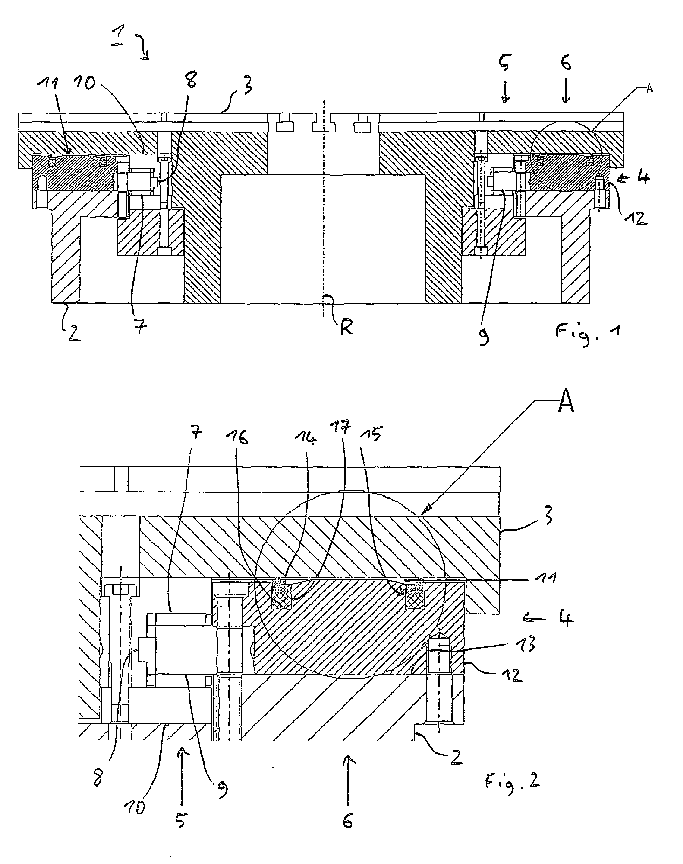

Die Figur 1 zeigt in vereinfachter Darstellung einen Rundtisch 1 einer nicht weiter dargestellten, insbesondere zum Bohren, Drehen und Fräsen geeigneten Werkzeugmaschine mit einem Rundtischbasisteil 2 und einer auf diesem drehbar gelagerten Drehplatte 3. Zur reibungsarmen, steifen und zugleich gedämpften Lagerung der Drehplatte 3 ist ein Rundtischlager 4 vorgesehen, welches ein Radial-Axial-Wälzlager 5 und einen Squeeze-Film-Dämpfer 6 umfasst. Das Radial-Axial-Wälzlager 5 ist als Zylinderrollenlager ausgebildet und umfasst zwei Reihen der Axiallagerung dienender Wälzkörper 7 sowie eine Reihe der Radiallagerung dienender Wälzkörper 8. Das Radial-Axial-Wälzlager 5 ist kompatibel mit so genannten YRT-Lagem, die beispielsweise aus dem Katalog "Wälzlager" der Schaeffler KG, Januar 2006, Seite 989 bis 1009, bekannt sind. Die Wälzkörper 7, 8, nämlich Zylinderrollen, rollen an der Oberfläche eines ersten Laufringteils 9 ab und kontaktieren zugleich ein zweites, zweiteilig aufgebautes, das erste Laufringteil 9 U-förmig umgreifendes Laufringteil 10, wobei das erste Laufringteil 9 fest mit dem Rundtischbasisteil 2 und das zweite Laufringteil 10 fest mit der Drehplatte 3 verbunden ist. Letztgenanntes Laufringteil 10 wird auch als Gegenlaufringteil bezeichnet.

Der Squeeze-Film-Dämpfer 6 ist hinsichtlich seiner Wirkung dem Radial-Axial-Wälzlager 5 parallel geschaltet und weist einen mit einem Fluid, insbesondere Öl, gefüllten Spalt 11 auf. Um die Dämpfungswirkung des Squeeze-Film-Dämpfers 6 verändern zu können, kann die Breite des Spalts 11 in der vereinfachten Darstellung nicht entnehmbarer Weise variabel sein.

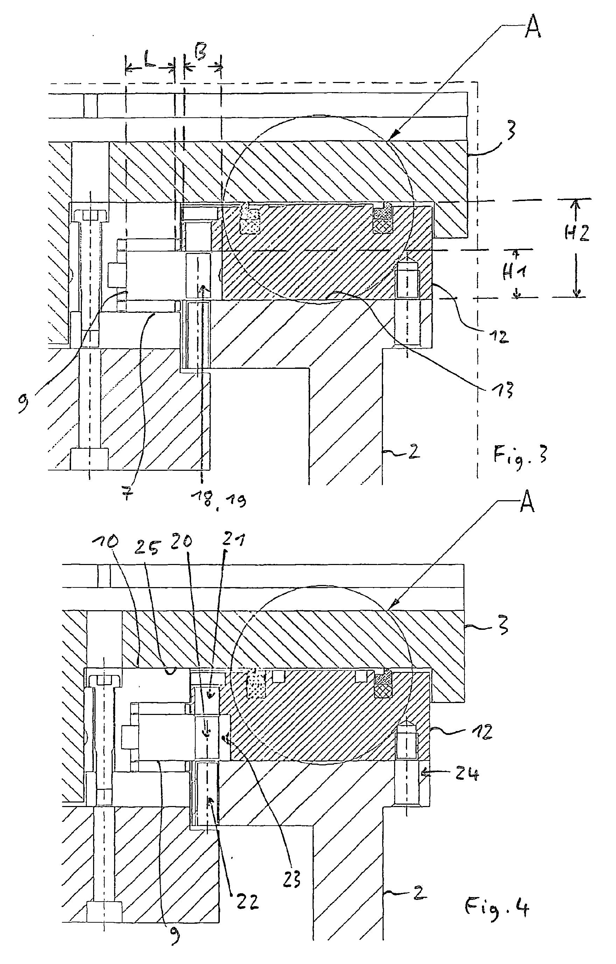

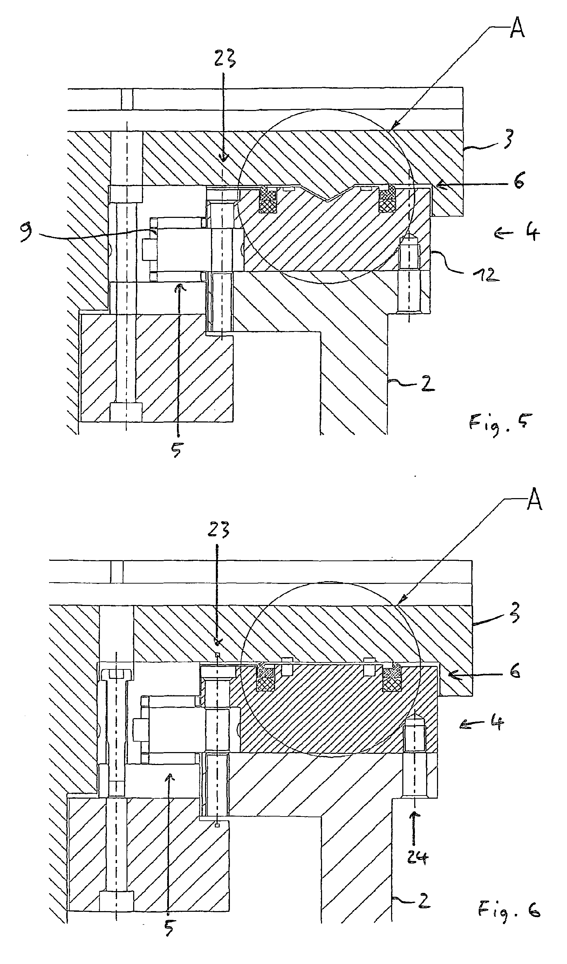

Verschiedene, in den Figuren 2 bis 6 dargestellte Ausführungsformen des Squeeze-Film-Dämpfers 6 (s. Detail A) unterscheiden sich hauptsächlich durch die Form des Dämpfungsspalts 11, wobei dieser mit Ausnahme des Ausführungsbeispiels nach Figur 5, welche einen V-förmigen Spaltquerschnitt zeigt, im Wesentlichen einen rechteckigen, langgestreckten, in Radialrichtung verlaufenden Querschnitt aufweist. In jeder Ausgestaltung ist ein das Radial-Axial-Wälzlager 5 ringförmig umgebendes Dämpfergrundbauteil 12 des Squeeze-Film-Dämpfers 6 an einer planen, zur Rundtischachse R normalen Oberfläche 13 des Rundtischbasisteils 2 befestigt, wobei das Dämpfergrundbauteil 12 den Dämpfungsspalt 11 unmittelbar begrenzt. Der radial innere sowie der radial äußere Rand des Dämpfungsspalts 11 ist mit jeweils einer Dichtung 14 abgedichtet, die sich in einer Nut 15 im Dämpfergrundbauteil 12 befindet. Weiter ist in der Nut 14, axial zwischen der Dichtung 14 und dem Nutgrund 16, ein Ring 17 aus einem elastischen Material angeordnet.

Das Dämpfergrundbauteil 12 weist auf seiner radial inneren, dem Rundtischbasisteil 2 zugewandten Seite einen ringförmig umlaufenden Absatz 18 auf, in den das erste Laufringteil 9, einen Überlappungsbereich 19 bildend, eingreift. Die in Radialrichtung gemessene Breite des Überlappungsbereichs 19, in welchem das erste Laufringteil 9 auf der Oberfläche 13 aufliegt, ist mit B, die in Axialrichtung gemessene Höhe des Überlappungsbereichs 19 mit H1 bezeichnet, wobei die Höhe H1 mit der Stärke des ersten Laufringteils 9 übereinstimmt.

In dem in den Überlappungsbereich 19 ragenden Teil des ersten Laufringteils 9 befindet sich eine Durchgangsbohrung 20, welche mit einer Durchgangsbohrung 21 im Dämpfergrundbauteil 12 sowie mit einer Gewindebohrung 22 im Rundtischbasisteil 2 fluchtet. Das Dämpfergrundbauteil 12 ist zusammen mit dem ersten Laufringteil 9 mittels einer Verschraubung 23 am Rundtischbasisteil 2 befestigt. Eine weitere Verschraubung 24 zwischen dem Dämpfergrundbauteil 12 und dem Rundtischbasisteil 2 befindet sich im radial äußeren Bereich des Dämpfergrundbauteils 12. Der gesamte Squeeze-Film-Dämpfer 6 ist radial außerhalb des Radial-Axial-Wälzlagers 5 angeordnet und nimmt, bezogen auf die Achse R, denselben axialen Bauraum ein.

Die in Axialrichtung gemessene Höhe H2 des Dämpfergrundbauteils 12 beträgt etwa das Doppelte der Höhe H1 des ersten Laufringteils 9. Der dem Rundtischbasisteil 2 abgewandte Teil des zweiten, rotierenden Laufringteils 10 liegt an einer normal zur Achse R angeordneten Oberfläche 25 der Drehplatte 3 an, wobei diese Oberfläche 25 in einem radial weiter außen liegenden Bereich den Dämpfungsspalt 11 begrenzt.

Die der Axiallagerung dienenden, das erste Laufringteil 9 kontaktierenden, als Zylinderrollen ausgebildeten Wälzkörper 7 haben eine mit L bezeichnete Länge, welche größer ist als die in Erstreckungsrichtung der Wälzkörper 7, das heißt in Radialrichtung des Rundtischlagers 4, gemessene Breite B des Überlappungsbereichs 19. Der Überlappungsbereich 19 ist damit nicht breiter als zur gemeinsamen, stabilen Befestigung des Dämpfergrundbauteils 12 und des ersten Laufringteils 9 am Rundtischbasisteil 2 erforderlich. Insgesamt ist die das Radial-Axial-Wälzlager 5 und den Squeeze-Film-Dämpfer 6 umfassende, kompakt aufgebaute Lager-Dämpfer-Einheit sehr gut zur Integration in bestehende Rundtischkonstruktionen geeignet.

**Bezugszeichenliste**

| | |
|---|---|
| 1 | Rundtisch |
| 2 | Rundtischbasisteil |
| 3 | Drehplatte |
| 4 | Rundtischlager |
| 5 | Radial-Axial-Wälzlager |
| 6 | Squeeze-Film-Dämpfer |
| 7 | Wälzkörper |
| 8 | Wälzkörper |
| 9 | Laufringteil |
| 10 | Laufringteil |
| 11 | Dämpfungsspalt |
| 12 | Dämpfergrundbauteil |
| 13 | Oberfläche |
| 14 | Dichtung |
| 15 | Nut |
| 16 | Nutgrund |
| 17 | Ring |
| 18 | Absatz |
| 19 | Überlappungsbereich |
| 20 | Durchgangsbohrung |
| 21 | Durchgangsbohrung |
| 22 | Gewindebohrung |
| 23 | Verschraubung |
| 24 | Verschraubung |
| 25 | Oberfläche |
| | |
| B | Breite des Überlappungsbereichs |
| H1 | Höhe des ersten Laufringteils |
| H2 | Höhe des Dämpfergrundbauteils |
| L | Länge der der Axiallagerung dienenden Wälzkörper |
| R | Rundtischachse |

## Patentansprüche

1. Rundtischlager (4), mit einem Radial-Axial-Wälzlager (5) zur Lagerung eines ersten Laufringteils (9) relativ zu einem zweiten Laufringteil (10) und mit einem dem Radial-Axial-Wälzlager (5) parallel geschalteten Squeeze-Film-Dämpfer (6), **dadurch gekennzeichnet, dass** der Squeeze-Film-Dämpfer (6) ein zu den Laufringteilen (9, 10) koaxiales Dämpfergrundbauteil (12) aufweist, welches zusammen mit einem Wälzkörper (7, 8) des Radial-Axial-Wälzlagers (5) kontaktierenden Laufringteil (9) an einem Rundtischbasisteil (2) befestigbar ist.

2. Rundtischlager nach Anspruch 1, **dadurch gekennzeichnet, dass** ein Dämpfungsspalt (11) des Squeeze-Film-Dämpfers (6) einen rechteckigen Querschnitt aufweist.

3. Rundtischlager nach Anspruch 1, **dadurch gekennzeichnet, dass** ein Dämpfungsspalt (11) des Squeeze-Film-Dämpfers (6) einen V-förmigen Querschnitt aufweist.

4. Rundtischlager nach einem der Ansprüche 1 bis 3, **dadurch gekennzeichnet, dass** der Squeeze-Film-Dämpfer (11) einen mittels im Dämpfergrundbauteil (12) angeordneter Dichtungen (14) abgedichteten Dämpfungsspalt (11) aufweist.

5. Rundtischlager nach einem der Ansprüche 1 bis 4, **dadurch gekennzeichnet, dass** der Squeeze-Film-Dämpfer (6) eine Spaltbreite von mindestens 20 µm aufweist.

6. Rundtischlager nach einem der Ansprüche 1 bis 5, **dadurch gekennzeichnet, dass** der Squeeze-Film-Dämpfer (6) eine Spaltbreite von maximal 500 µm aufweist.

7. Rundtischlager nach einem der Ansprüche 1 bis 6, **dadurch gekennzeichnet, dass** der Squeeze-Film-Dämpfer (6) mit einer elektro- oder magnetorheologischen Flüssigkeit gefüllt ist.

8. Rundtischlager nach einem der Ansprüche 1 bis 7, **gekennzeichnet durch** eine das Dämpfergrundbauteil (12) sowie das erste Laufringteil (9) durchdringende Verschraubung (23) zur Befestigung des Dämpfergrundbauteils (12) und des ersten Laufringteils (9) am Rundtischbasisteil (2).

9. Rundtischlager nach einem der Ansprüche 1 bis 8, **dadurch gekennzeichnet, dass** das Dämpfergrundbauteil (12) sowie das erste Laufringteil (9) auf einer einzigen, planen Oberfläche (13) des Rundtischbasisteils (2) aufliegen können.

10. Rundtischlager nach einem der Ansprüche 1 bis 9, **dadurch gekennzeichnet, dass** das erste Laufringteil (9) unter Bildung eines Überlappungsbereichs (19) in einen ringförmig umlaufenden Absatz (18) des Dämpfergrundbauteils (12) eingreift.

11. Rundtischlager nach Anspruch 10, **dadurch gekennzeichnet, dass** der Überlappungsbereich (19) zwischen dem ersten Laufringteil (9) und dem Dämpfergrundbauteil (12) in Radialrichtung des Radial-Axial-Wälzlagers (5) schmaler als eine Laufbahn ist, auf welcher die der Radiallagerung dienenden Wälzkörper (7) abrollen.

12. Rundtischlager nach Anspruch 10 oder 11, **dadurch gekennzeichnet, dass** die in Axialrichtung des Radial-Axial-Wälzlagers (5) gemessene Höhe (H1) des Überlappungsbereichs (19) mindestens die die Hälfte der in derselben Richtung gemessenen Höhe (H2) des Dämpfergrundbauteils (12) beträgt.

13. Rundtischlager nach einem der Ansprüche 1 bis 12, **dadurch gekennzeichnet, dass** der Squeeze-Film-Dämpfer (6) radial außerhalb des Radial-Axial-Wälzlagers (5) angeordnet ist.

14. Rundtischlager nach einem der Ansprüche 1 bis 13, **dadurch gekennzeichnet, dass** der Squeeze-Film-Dämpfer (6) und das Radial-Axial-Wälzlager (5) denselben axialen Bauraum einnehmen.

## Claims

1. Rotary table bearing (4), having a radial-axial rolling bearing (5) for mounting a first race ring part (9) relative to a second race ring part (10) and having a squeeze film damper (6) which is connected in parallel with the radial-axial rolling bearing (5), **characterized in that** the squeeze film damper (6) has a damper base component (12) which is coaxial with respect to the race ring parts (9, 10) and which can be fastened together with a race ring part (9), which makes contact with a rolling body (7, 8) of the radial-axial rolling bearing (5), to a rotary table base part (2).

2. Rotary table bearing according to Claim 1, **characterized in that** a damping gap (11) of the squeeze film damper (6) has a rectangular cross section.

3. Rotary table bearing according to Claim 1, **characterized in that** a damping gap (11) of the squeeze film damper (6) has a V-shaped cross section.

4. Rotary table bearing according to one of Claims 1 to 3, **characterized in that** the squeeze film damper (6) has a damping gap (11) which is sealed off by means of seals (14) arranged in the damper base component (12).

5. Rotary table bearing according to one of Claims 1 to 4, **characterized in that** the squeeze film damper (6) has a gap width of at least 20 µm.

6. Rotary table bearing according to one of Claims 1 to 5, **characterized in that** the squeeze film damper (6) has a gap width of at most 500 µm.

7. Rotary table bearing according to one of Claims 1 to 6, **characterized in that** the squeeze film damper (6) is filled with an electrorheological or magnetorheological liquid.

8. Rotary table bearing according to one of Claims 1 to 7, **characterized by** a screw connection (23), which extends through the damper base component (12) and through the first race ring part (9), for fastening the damper base component (12) and the first race ring part (9) to the rotary table base part (2).

9. Rotary table bearing according to one of Claims 1 to 8, **characterized in that** the damper base component (12) and the first race ring part (9) can bear against a single planar surface (13) of the rotary table base part (2).

10. Rotary table bearing according to one of Claims 1 to 9, **characterized in that** the first race ring part (9) engages into an annularly encircling step (18) of the damper base component (12) so as to form an overlap region (19).

11. Rotary table bearing according to Claim 10, **characterized in that** the overlap region (19) between the first race ring part (9) and the damper base component (12) is narrower in the radial direction of the radial-axial rolling bearing (5) than a raceway on which the rolling bodies (7) which serve for radial mounting roll.

12. Rotary table bearing according to Claim 10 or 11, **characterized in that** the height (H1), measured in the axial direction of the radial-axial rolling bearing (5), of the overlap region (19) amounts to at least half of the height (H2), measured in the same direction, of the damper base component (12).

13. Rotary table bearing according to one of Claims 1 to 12, **characterized in that** the squeeze film damper (6) is arranged radically outside the radial-axial rolling bearing (5).

14. Rotary table bearing according to one of Claims 1 to 13, **characterized in that** the squeeze film damper (6) and the radial-axial rolling bearing (5) take up the same axial installation space.

## Revendications

1. Palier de plateau circulaire (4), comprenant un palier à roulement radial-axial (5) pour le support sur palier d'une première partie de bague de roulement (9) par rapport à une deuxième partie de bague de roulement (10) et un amortisseur à film écrasé (6) raccordé parallèlement au palier à roulement radial-axial (5), **caractérisé en ce que** l'amortisseur à film écrasé (6) présente un composant de base d'amortisseur (12) coaxial aux parties de bague de roulement (9, 10) qui peut être fixé conjointement avec une partie de bague de roulement (9) venant en contact avec des corps de roulement (7, 8) du palier à roulement radial-axial (5) sur une partie de base de plateau circulaire (2).

2. Palier de plateau circulaire selon la revendication 1, **caractérisé en ce qu'**un interstice d'amortissement (11) de l'amortisseur à film écrasé (6) présente une section transversale rectangulaire.

3. Palier de plateau circulaire selon la revendication 1, **caractérisé en ce qu'**un interstice d'amortissement (11) de l'amortisseur à film écrasé (6) présente une section transversale en forme de V.

4. Palier de plateau circulaire selon l'une quelconque des revendications 1 à 3, **caractérisé en ce que** l'amortisseur à film écrasé (6) présente un interstice d'amortissement (11) étanchéifié au moyen de joints d'étanchéité (14) disposés dans le composant de base d'amortisseur (12).

5. Palier de plateau circulaire selon l'une quelconque des revendications 1 à 4, **caractérisé en ce que** l'amortisseur à film écrasé (6) présente une largeur d'interstice d'au moins 20 µm.

6. Palier de plateau circulaire selon l'une quelconque des revendications 1 à 5, **caractérisé en ce que** l'amortisseur à film écrasé (6) présente une largeur d'interstice d'au plus 500 µm.

7. Palier de plateau circulaire selon l'une quelconque des revendications 1 à 6, **caractérisé en ce que** l'amortisseur à film écrasé (6) est rempli d'un liquide électrorhéologique ou magnétorhéologique.

8. Palier de plateau circulaire selon l'une quelconque des revendications 1 à 7, **caractérisé par** un vissage (23) traversant le composant de base d'amortisseur (12) ainsi que la première partie de bague de roulement (9) pour la fixation du composant de base d'amortisseur (12) et de la première partie de bague de roulement (9) sur la partie de base de plateau circulaire (2).

9. Palier de plateau circulaire selon l'une quelconque des revendications 1 à 8, **caractérisé en ce que** le composant de base d'amortisseur (12) ainsi que la première partie de bague de roulement (9) peuvent reposer sur une surface plane unique (13) de la partie de base de plateau circulaire (2).

10. Palier de plateau circulaire selon l'une quelconque des revendications 1 à 9, **caractérisé en ce que** la première partie de bague de roulement (9) vient en prise dans un épaulement annulaire périphérique (18) du composant de base d'amortisseur (12) en formant une région de chevauchement (19).

11. Palier de plateau circulaire selon la revendication 10, **caractérisé en ce que** la région de chevauchement (19) entre la première partie de bague de roulement (9) et le composant de base d'amortisseur (12) dans la direction radiale du palier à roulement radial-axial (5) est plus étroite qu'une bande de roulement sur laquelle roulent les corps de roulement (7) servant au support sur palier radial.

12. Palier de plateau circulaire selon la revendication 10 ou 11, **caractérisé en ce que** la hauteur (H1) de la région de chevauchement (19) mesurée dans la direction axiale du palier à roulement radial-axial (5) vaut au moins la moitié de la hauteur (H2) du composant de base d'amortisseur (12) mesurée dans la même direction.

13. Palier de plateau circulaire selon l'une quelconque des revendications 1 à 12, **caractérisé en ce que** l'amortisseur à film écrasé (6) est disposé radialement à l'extérieur du palier à roulement radial-axial (5).

14. Palier de plateau circulaire selon l'une quelconque des revendications 1 à 13, **caractérisé en ce que** l'amortisseur à film écrasé (6) et le palier à roulement radial-axial (5) occupent le même espace de construction axial.
